# EUROPEAN PATENT APPLICATION

(11) **EP 3 216 691 A1**
(43) Date of publication of application: **13.09.2017**
(21) Application number: 16158952.8
(22) Date of filing: 07.03.2016
(51) Int. Cl.: B64C 1/06, B64F 5/00

(54) **AIRFRAME COMPONENT AND METHODS FOR MANUFACTURING AN AIRFRAME COMPONENT**

(71) Applicant: Airbus Operations GmbH, 21129 Hamburg (DE)
(72) Inventor: BENTHIEN, Hermann, 21129 Hamburg (DE); HEGENBART, Matthias, 21129 Hamburg (DE); ROHDE, Jens, 21129 Hamburg (DE)
(74) Representative: Isarpatent

(57) **Abstract**

An airframe component includes a skin panel (1), a plurality of stringers (2) attached to the skin panel, and at least one former (3) running substantially perpendicular to the plurality of stringers (2) on the skin panel (1), the at least one former (3) being generatively formed on the skin panel by an Additive Manufacturing, AM, method.

## Description

The present invention relates to an airframe component of an aircraft or spacecraft that is additively manufactured at least in parts and methods for manufacturing an airframe component, in particular by using additive manufacturing (AM) techniques for fabricating structural elements of the airframe component.

Fuselages of aircraft may be constructed in a semi-monocoque type of assembly. Frames or formers are shaped in the outer shape of the fuselage cross-sections and installed on a rigid fixture. After joining the formers with perpendicularly running stringers, the grid of stringers and formers is covered with a skin, usually plates of sheet aluminum that are attached via rivets or via adhesive bonds to the formers and/or stringers. The fixture is then disassembled and removed from the completed fuselage shell element. Several shell elements are put together in larger sections and joined with fasteners to form the complete fuselage.

For this conventional type of assembly a relatively high number of fasteners, rivets and/or bonds is needed, all of which are negatively impacting the overall weight of the aircraft. It would be desirable to find solutions for reducing the number of connectors or connecting means for fuselages. For example, document DE 199 60 909 A1 suggests using an extrusion molded skin panel having stiffeners formed thereon. M. Pacchione, J. Telgkamp: "Challenges of the metallic fuselage", 25th Congress of International Council of the Aeronautical Sciences, 3 - 8 September 2006, Hamburg, Germany, Paper ICAS 2006-4.5.1 discloses evolved strategies for forming metallic fuselage components involving integrated materials-technologies solutions enabling the production of structures with lower weight.

One object of the invention is therefore to provide solutions for manufacturing lightweight airframe components, particularly for use in aerospace industries, which are optimized in design and weight and still have high mechanical performance with regard to stability, rigidity and reinforcement.

This object is achieved by an airframe component having the features of claim 1, an aircraft having the features of claim 11, a method for manufacturing an airframe component having the features of claim 12, a method for manufacturing an airframe component having the features of claim 13, and a method for manufacturing an airframe component having the features of claim 14.

A first aspect of the invention hence pertains to an airframe component, comprising a skin panel, a plurality of stringers attached to the skin panel, and at least one former running substantially perpendicular to the plurality of stringers on the skin panel, the at least one former being generatively formed on the skin panel by an Additive Manufacturing, AM, method.

According to a second aspect of the invention, an aircraft includes at least one airframe component according to the first aspect of the invention.

According to a third aspect of the invention, a method for manufacturing an airframe component comprises thermoforming a skin panel, attaching a plurality of stringers to the skin panel, and generatively forming at least one former running substantially perpendicular to the plurality of stringers on the skin panel using an Additive Manufacturing, AM, method.

According to a fourth aspect of the invention, a method for manufacturing an airframe component comprises generatively forming a skin panel using an Additive Manufacturing, AM, method, attaching a plurality of stringers to the skin panel, and generatively forming at least one former running substantially perpendicular to the plurality of stringers on the skin panel using the AM method.

According to a fifth aspect of the invention, a method for manufacturing an airframe component comprises generatively forming a skin panel using an Additive Manufacturing, AM, method, generatively forming a plurality of stringers to the skin panel using the AM method, and generatively forming at least one former running substantially perpendicular to the plurality of stringers on the skin panel using the AM method.

The idea on which the present invention is based is to integrate additive manufacturing methods (AM), such as for example selective laser sintering (SLS), fused deposition modelling (FDM), selective laser melting (SLM) or laser deposition welding (LDW), into the fabrication of airframe components, such as for example fuselage shell panels. By adapting the AM processes to directly print structural elements on skin panels, highly complex functional geometries may be manufactured as supporting structures, leading to a high degree of structural complexity, freedom of design and intricate functional integration.

Among the several advantages of such hybrid composite parts of skin panels with AM fabricated functional structures are the lightweight design and the high mechanical stability. The cycle times for fabricating the functionally enhanced thermoplastic sheets in that manner are significantly reduced, as well as the lead time for the design and production processes and the energy consumption during the fabrication. The material usage is optimized in AM methods since there is little to no waste material during the fabrication. Moreover, the amount of fasteners like rivets, bolts or adhesive bonds is vastly reduced, leading to a very weight efficient airframe.

The solution of the invention offers great advantages for 3D printing or additive manufacturing (AM) technology since 3D components or objects may be printed without the additional need for subjecting the components or objects to further processing steps such as milling, cutting or drilling. This allows for a more efficient, material saving and time saving manufacturing process for objects. One of the most prominent advantages is the reduced size of airframe components manufactured partly or entirely with AM technology. Specifically for fuselage shell components, the reduced thickness of the components enables a smaller diameter for fuselages leading to reduced air drag or a larger inner diameter within the fuselage leading to more cabin space or cargo room in the aircraft.

Particularly advantageous in general is the reduction of costs, weight, lead time, part count and manufacturing complexity coming along with employing AM technology for printing functionally enhanced airframe components. Moreover, the geometric shape of the printed structural elements may be flexibly designed with regard to the intended functionality and desired purpose of the airframe component.

Using laser deposition welding (LDW) processes, the welding and 3D printing may be advantageously integrated into the same manufacturing procedure, enabling a fully automated fabrication process to be implemented. Fatigue problems may be entirely eliminated due to the utilization of bionically designed structures and the use of relaxation forming for welded and/or printed parts. Additionally, laser shot peening may be integrated into the manufcturing process, leading to a higher lifetime expectancy of the airframe components. By choosing the right materials for fabrication of the airframe components, the airframe components may provide advantageous properties such as lightning strike protection or resistance against corrosion. Any of the welded and/or 3D printed airframe components are susceptible to welding-based repair processes and are fully recyclable.

According to an embodiment of the airframe component, the AM method may comprise fused deposition modelling, FDM, selective laser melting, SLM, selective laser sintering, SLS, or laser deposition welding, LDW.

According to another embodiment of the airframe component, the stringers may be welded to the skin panel.

According to another embodiment of the airframe component, the airframe component may further comprise a support element connecting one of the plurality of stringers and the at least one former. In one embodiment, the support element may be arranged between a web portion of the at least one former and a top flange portion of the one of the plurality of stringers. In some embodiments, the support element may also be generatively formed using the AM method, particularly during the generative formation of the former, i.e. the support element and the former may be 3D-printed in one go and as an integral structure.

According to another embodiment of the airframe component, two of the plurality of stringers may adjoin each other in a segment boundary region. In such embodiement, the at least one former may be generatively formed on the skin panel in the segment boundary region between the two adjoining ones of the plurality of stringers. In some embodiments, the two adjoining ones of the plurality of stringers are welded to opposite surfaces of a web portion of the at least one former.

According to a further embodiment of the airframe component, the at least one former may comprise a mousehole opening in its web portion, with at least one of the plurality of stringers extending through said mousehole opening.

According to another embodiment of the airframe component, the skin panel and/or the plurality of stringers may be generatively formed using the AM method. In particular, the formation of the skin panel and/or the plurality of stringers may be performed at the same time as the formation of the former and/or the support element, so that the respectively additively manufactured parts of the airframe component may be integrally 3D-printed in one go.

According to some embodiments of the methods for manufacturing airframe components, the AM method used may comprise fused deposition modelling, FDM, selective laser melting, SLM, selective laser sintering, SLS, or laser deposition welding, LDW.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates an airframe component according to an embodiment of the invention.
Fig. 2 schematically illustrates an airframe component according to another embodiment of the invention.
Fig. 3 schematically illustrates an aircraft including an airframe component according to another embodiment of the invention.
Fig. 4 schematically illustrates a flow diagram of a method for manufacturing an airframe component according to another embodiment of the invention.
Fig. 5 schematically illustrates a flow diagram of a method for manufacturing an airframe component according to yet another embodiment of the invention.
Fig. 6 schematically illustrates a flow diagram of a method for manufacturing an airframe component according to yet a further embodiment of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

Additive layer manufacturing (ALM), selective laser sintering (SLS) and fused deposition modelling (FDM) techniques, generally termed as 3D printing techniques, may be used in procedures for building up three-dimensional solid objects based on digital model data. 3D printing is currently used for prototyping and distributed manufacturing with multiple applications in engineering, construction, industrial design, automotive industries and aerospace industries.

Free form fabrication (FFF), direct manufacturing (DM), fused deposition modelling (FDM), powder bed printing (PBP), laminated object manufacturing (LOM), stereolithography (SL), selective laser sintering (SLS), selective laser melting (SLM), selective heat sintering (SHS), electron beam melting (EBM), direct ink writing (DIW), digital light processing (DLP), laser deposition welding (LDW) and additive layer manufacturing (ALM) belong to a general hierarchy of additive manufacturing (AM) methods. Those systems are used for generating three-dimensional objects by creating a cross-sectional pattern of the object to be formed and forming the three-dimensional solid object by sequentially building up layers of material. Any of such procedures will be referred to in the following description as AM or 3D printing without loss of generality. AM or 3D printing techniques usually include selectively depositing material layer by layer, selectively fusing or solidifying the material and removing excess material, if needed.

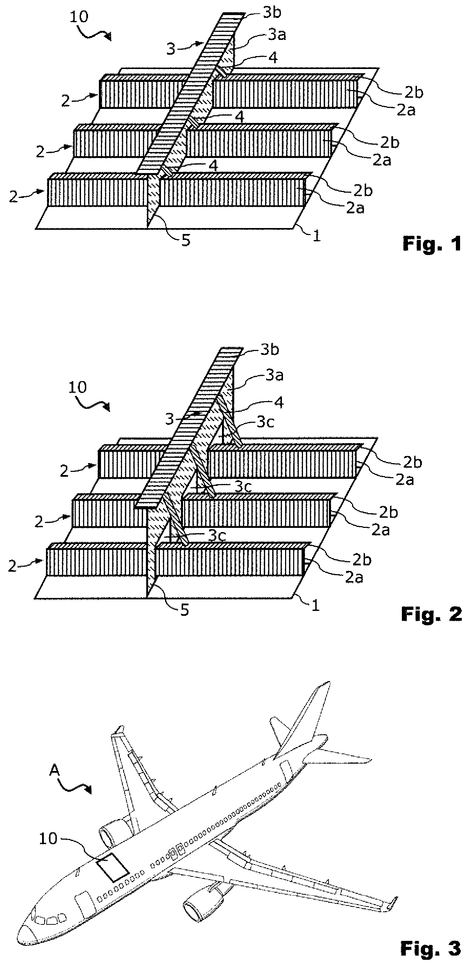

Fig. 1 schematically illustrates an exemplary airframe component 10, for example a fuselage shell panel. The airframe component 10 may generally be generated, at least in parts, by using an additive manufacturing (AM) method, for example selective laser sintering (SLS), selective laser melting (SLM) or fused deposition modelling (FDM). The AM method may for example make use of a metallic material as printing material, such as for example AIMgSc (Scalmalloy®).

One particular AM method that may be used is laser deposition welding (LDW) that uses a metal powder nozzle to deposit metal powder in layers onto a base material. A laser diode fuses the deposited metal powder on the fly without pores or cracks, thereby forming a high-strength welded bond of the metal powder with the deposition surface. A coaxial inert gas prevents oxidation during the build-up process. After cooling, an additively printed structure made from laser welded layers of metal is produced. In contrast to laser melting in a powder bed, laser deposition welding enables large parts to be manufactured using a metal powder nozzle.

The airframe component 10 includes a skin panel 1 which may be thermoformed or generatively manufactured using an AM method. The skin panel 1 may for example be pre-manufactured in a hot creep forming procedure. The skin panel 1 may for example be manufactured from Scalmalloy® and may be subject to relaxation procedures after forming in order to enable stress relief and forestall fatigue problems.

A plurality of stringers 2 is attached to the skin panel 1. The stringers 2 may for example have a web portion 2a and one or more flange portions 2b. The stringers 2 may for example be J-stringers, T-stringers, Z-stringers, Ω-stringers, hat stringers or stringers with other cross-sectional shapes. The stringers 2 may run substantially parallel to each other and may be equidistantly spaced apart from each other of the skin panel 1. The stringers 2 may be pre-bent and may conform to the inner curvature of the skin panel 1, if any. It may be possible to weld the stringers 2 to the skin panel 1. Alternatively, the stringers 2 may be generatively formed on the skin panel 1 by using an AM method, such as SLS, SLM, FDM or LDW.

A former 3 runs substantially perpendicular to the plurality of stringers 2 on the skin panel 1. The number of formers 3 is exemplarily depicted as one in Figs. 1 and 2, however, more than one former 3 may be provided on the skin panel 1. The formers 3 may for example run parallel to each other and may be equidistantly spaced apart from each other of the skin panel 1. The former 3 is generatively formed on the skin panel 1 by an Additive Manufacturing, AM, method, such as for example SLS, SLM, FDM or LDW.

A number of support elements 4 may be provided that connect one of the plurality of stringers 2 and the former 3, respectively. For example, a diagonally running strut may be provided as support element 4 which may be arranged between a web portion 3a of the former 3 and a respective top flange portion 2b of the stringers 2. The support elements 4 may in particular be generatively formed using the same AM method as used for manufacturing the former(s) 3 and may be integrally formed together with the former(s) 3. The support elements 4 may for example comprise Scalmalloy® as main fabrication material.

As shown exemplarily in Fig. 1, two of the plurality of stringers 2 may adjoin each other in a segment boundary region. In between the segment boundary region the former 3 is generatively formed on the skin panel 1, i.e. between the two adjoining ones of the plurality of stringers 2. The two adjoining ones of the plurality of stringers 2 are shown to be welded to opposite surfaces of the web portion 3a of the former 3. The portion of the skin panel 1 where the former 3 is additively manufactured on the skin panel 1 may be locally thickened to enhance the mechanical stability.

Alternatively, and as illustrated exemplarily in Fig. 2, the former 3 may include mousehole openings 3c in its web portion 3a. The stringers 2 may extend through respective ones of the mousehole openings 3c.

Fig. 3 exemplarily depicts an aircraft A that includes at least one airframe component 10 as described in conjunction with one of the Figs. 1 and 2. The airframe component 10 may for example be a fuselage shell panel for the fuselage of the aircraft A. The airframe component 10 may in particular comprise AlMgSc (Scalmalloy®) as one of the main fabrication materials.

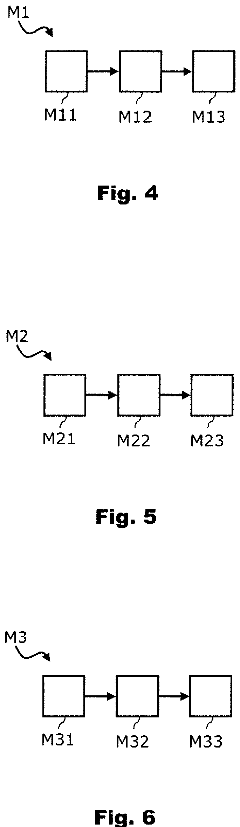

Figs. 4, 5 and 6 each show schematic illustrations of flow diagram of methods M1, M2 and M3, respectively, for manufacturing airframe components such as for example an airframe component 10 as exemplarily shown and described in conjunction with Figs. 1 and 2. The methods M1, M2 and M3 may in particular be used for producing functionally enhanced fuselage shell components that may be employed for aircraft such as the aircraft A as shown in conjunction with Fig. 3.

A first method M1 for manufacturing an airframe component 10 includes in a first step M11 thermoforming a skin panel 1. In a second step M12 a plurality of stringers 2 are attached to the skin panel 1. Then, in a third step M13, at least one former 3 running substantially perpendicular to the plurality of stringers 2 on the skin panel 1 is generatively formed using an Additive Manufacturing, AM, method.

A second method M2 for manufacturing an airframe component 10 includes in a first step M21 generatively forming a skin panel 1 using an Additive Manufacturing, AM, method. In a second step M22 a plurality of stringers 2 are attached to the skin panel 1. Then, in a third step M23, at least one former 3 running substantially perpendicular to the plurality of stringers 2 on the skin panel 1 is generatively formed using the Additive Manufacturing, AM, method.

A third method M3 for manufacturing an airframe component 10 includes in a first step M31 generatively forming a skin panel 1 using an Additive Manufacturing, AM, method. In a second step M32 a plurality of stringers 2 are generatively formed on the skin panel 1 using the AM method. Then, in a third step M33, at least one former 3 running substantially perpendicular to the plurality of stringers 2 on the skin panel 1 is generatively formed using the Additive Manufacturing, AM, method.

In each of the methods M1, M2 and M3, the AM method may for example comprise fused deposition modelling, FDM, selective laser melting, SLM, selective laser sintering, SLS, or laser deposition welding, LDW.

The methods M1, M2 and M3 may be transcribed into computer-executable instructions on a computer-readable medium which, when executed on a data processing apparatus, cause the data processing apparatus to perform the steps of the respective method. Particularly, the computer-executable instructions for executing the methods may be implemented in STL file or similar format which may be processed and executed using 3D printers, AM tools and similar rapid prototyping equipment integrated into an AM system with thermoforming capabilities for thermoforming thermoplastic sheets as substrate for the AM.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference numerals and signs

- 1: Skin
- 2: Stringer
- 2a: Stringer web portion
- 2b: Stringer flange portion
- 3: Former
- 3a: Former web portion
- 3b: Former flange portion
- 3c: Former mousehole opening
- 4: Support element
- 5: Former attachment line
- 10: Airframe component
- A: Aircraft
- M1: Method
- M11: Method step
- M12: Method step
- M13: Method step
- M2: Method
- M21: Method step
- M22: Method step
- M23: Method step
- M3: Method
- M31: Method step
- M32: Method step
- M33: Method step

## Claims

1. Airframe component (10), comprising:
a skin panel (1);
a plurality of stringers (2) attached to the skin panel (1); and
at least one former (3) running substantially perpendicular to the plurality of stringers (2) on the skin panel (1), the at least one former (3) being generatively formed on the skin panel (1) by an Additive Manufacturing, AM, method.

2. Airframe component (10) according to claim 1, wherein the AM method comprises fused deposition modelling, FDM, selective laser melting, SLM, selective laser sintering, SLS, or laser deposition welding, LDW.

3. Airframe component (10) according to one of the claims 1 and 2, wherein the stringers (2) are welded to the skin panel (1).

4. Airframe component (10) according to one of the claims 1 to 3, further comprising:
a support element (4) connecting one of the plurality of stringers (2) and the at least one former.

5. Airframe component (10) according to claim 4, wherein the support element (4) is arranged between a web portion (3a) of the at least one former (3) and a top flange portion (2b) of the one of the plurality of stringers (2).

6. Airframe component (10) according to one of the claims 4 and 5, wherein the support element (4) is generatively formed using the AM method.

7. Airframe component (10) according to one of the claims 1 to 6, wherein two of the plurality of stringers (2) adjoin each other in a segment boundary region, and wherein the at least one former (3) is generatively formed on the skin panel (1) in the segment boundary region between the two adjoining ones of the plurality of stringers (2).

8. Airframe component (10) according to claim 7, wherein the two adjoining ones of the plurality of stringers (2) are welded to opposite surfaces of a web portion (3a) of the at least one former (3).

9. Airframe component (10) according to one of the claims 1 to 6, wherein the at least one former (3) comprises a mousehole opening (3c) in its web portion (3a), with at least one of the plurality of stringers (2) extending through said mousehole opening (3c).

10. Airframe component (10) according to one of the claims 1 to 9, wherein the skin panel (1) and/or the plurality of stringers (2) is generatively formed using the AM method.

11. Aircraft (A), comprising at least one airframe component (10) according to one of the claims 1 to 10.

12. Method (M1) for manufacturing an airframe component (10), the method (M1) comprising:
thermoforming (M11) a skin panel (1);
attaching (M12) a plurality of stringers (2) to the skin panel (1); and
generatively forming (M13) at least one former (3) running substantially perpendicular to the plurality of stringers (2) on the skin panel (1) using an Additive Manufacturing, AM, method.

13. Method (M2) for manufacturing an airframe component (10), the method (M2) comprising:
generatively forming (M21) a skin panel (1) using an Additive Manufacturing, AM, method;
attaching (M22) a plurality of stringers (2) to the skin panel (1); and
generatively forming (M23) at least one former (3) running substantially perpendicular to the plurality of stringers (2) on the skin panel (1) using the AM method.

14. Method (M3) for manufacturing an airframe component (10), the method (M3) comprising:
generatively forming (M31) a skin panel (1) using an Additive Manufacturing, AM, method;
generatively forming (M32) a plurality of stringers (2) to the skin pane! (1) using the AM method; and
generatively forming (M33) at least one former (3) running substantially perpendicular to the plurality of stringers (2) on the skin panel (1) using the AM method.

15. Method (M1; M2; M3) according to one of the claims 12 to 14, wherein the AM method comprises fused deposition modelling, FDM, selective laser melting, SLM, selective laser sintering, SLS, or laser deposition welding, LDW.
